# EUROPEAN PATENT SPECIFICATION

(11) **EP 3 839 235 B1**
(45) Date of publication and mention of the grant of the patent: **07.06.2023**
(21) Application number: 20193540.0
(22) Date of filing: 31.08.2020
(51) Int. Cl.: F02D 41/02, F01N 9/00

(54) **METHOD AND SYSTEM FOR CONTROLLING DPF REGENERATION, AND ENGINE**
VERFAHREN UND SYSTEM ZUR STEUERUNG DER DPF-REGENERATION UND MOTOR
PROCÉDÉ ET SYSTÈME DE COMMANDE DE RÉGÉNÉRATION DE DPF ET MOTEUR

(30) Priority: 20.12.2019 CN 201911321592
(43) Date of publication of application: 23.06.2021
(73) Proprietor: Weichai Power Co., Ltd., Weifang, Shandong 261061 (CN)
(72) Inventor: TAN, Xuguang, Weifang, Shandong 261061 (CN); TONG, Dehui, Weifang, Shandong 261061 (CN); FAN, Zhenyong, Weifang, Shandong 261061 (CN); HAN, Feng, Weifang, Shandong 261061 (CN); CHU, Guoliang, Weifang, Shandong 261061 (CN); WANG, Jiaxing, Weifang, Shandong 261061 (CN); FENG, Haihao, Weifang, Shandong 261061 (CN); WANG, Sumei, Weifang, Shandong 261061 (CN); QIU, Dong, Weifang, Shandong 261061 (CN)
(74) Representative: Plasseraud IP

(56) References cited:
- EP-A1- 2 918 801
- CN-A- 106 640 303
- US-A- 5 195 316
- US-A1- 2005 267 670
- US-B2- 6 666 019

## Description

### TECHNICAL FIELD

The present application relates to the field of engines, and in particular to a method and system for controlling DPF regeneration, as well as an engine.

### BACKGROUND

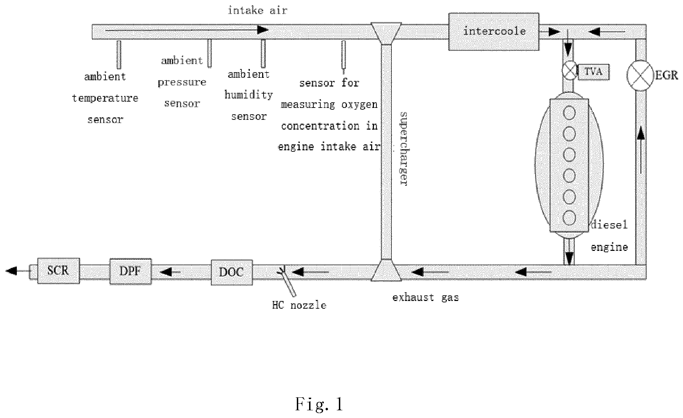

A diesel particulate filter (DPF) is a ceramic filter installed in an exhaust system of a diesel engine. As shown in FIG. 1, it can capture particulate emissions before they enter the atmosphere. A small part of the engine exhaust gas passes through an exhaust gas recirculation (EGR) system and enters cylinders together with air through throttle valves (TVA) for combustion. After that, a part of the exhaust gas passes through a HC nozzle, a diesel oxidation catalyst (DOC), the DPF and a selective catalytic reduction (SCR) system, and is then discharged. As more and more fine particles are collected in the DPF, a back pressure of the exhaust gas will gradually rise, which will affect the power of the engine. Diesel is injected in the post-treatment. Oxygen in the DOC reacts with the diesel to increase the temperature at an inlet of the DPF, and high temperature is used to burn off carbon particles in the DPF. This process is called DPF regeneration. Standard conditions are: in a laboratory environment, an intake air conditioner is installed for the engine, with an ambient temperature being 25°C, an outlet humidity of the air conditioner being 45%, and an outlet pressure of the air conditioner being 101kPa. However, when the engine is not actually working or under working conditions such as heating in winter and cooling in summer, a carbon load of the DPF (the mass of soot inside the DPF) is quite different from that during normal operation. However, it is difficult for the existing carbon load model to accurately judge the DPF regeneration under such working conditions, and the problem of DPF burnout is prone to occurrence.

CN106640303A provides a regeneration control system of a diesel engine particle collecting device. The regeneration control system includes a loading capacity evaluation unit, a regeneration control unit, and a regeneration temperature management unit; the loading capacity evaluation unit is responsible for evaluating the content of collected particles in the particle collecting device, and is used for determining if active regeneration needs to be triggered or not; an active regeneration trigger manner includes differential pressure particle trigger evaluation, discharged particle trigger evaluation, traveling distance trigger evaluation, fuel consumption trigger evaluation, operation time trigger evaluation, and differential pressure protection trigger evaluation; when one or more trigger manners meet an active regeneration request, a regeneration request trigger coordination module of the loading capacity evaluation unit sends the active regeneration request to the regeneration control unit; In discharged particle trigger evaluation, the influence of the mount of particles loaded by a carrier, the mass and the flow of waste gas flowing through the carrier, the oxygen content of the waste gas, the carrier temperature, and particle distribution on the active regeneration rate is fully considered. It is ensured that the regeneration request of the particle collecting device can be reasonably determined.

US5195316A discloses an arrangement wherein parameters which are related to the rate at which particulate matter accumulates and is reburnt, are monitored and the time at which a regeneration is required and/or the length of time a regeneration should be induced, are derived based on the same. The temperature at the inlet and outlet of a trap in which particulate matter is accumulated are monitored and measures such as throttling the induction and exhaust are implement in addition to energizing a heater disposed immediately upstream of the trap as required in order to elevate the trap temperature and to induce and maintain the reburning during a trap regeneration. The pressure differential across the trap can be used to determine the amount of incombustible matter (ash) which has accumulated in the trap and to modify the regeneration timing. When the temperature of the exhaust gases cannot be raised sufficiently, a by-pass is opened to attenuate cooling of the trap by the low temperature gases.

In summary, there is a need to provide a method, a system and an engine for controlling DPF regeneration, which can control DPF regeneration according to actual working conditions and prevent the DPF from being burned out.

### SUMMARY

In order to solve the above problems, the present application proposes a method and system for controlling DPF regeneration, and an engine.

In an aspect, the present application proposes a method according to claim 1 for controlling DPF regeneration, which includes:
calculating a correction factor in real time by dividing a low-load running time by a total running time of an engine;
determining an elapsed time, a fuel amount consumed and a mileage traveled from the last DPF regeneration to the current time, according to the time, fuel consumption and travel mileage at the time of the last DPF regeneration;
determining a corrected running time, a corrected fuel consumption and a corrected travel mileage, according to the correction factor, the elapsed time, the fuel amount consumed and the mileage traveled; and
judging whether the corrected running time, the corrected fuel consumption and the corrected travel mileage exceed corresponding thresholds, and triggering DPF regeneration if one of them exceeds the corresponding threshold.

Further, in the method for controlling DPF regeneration as described above, before calculating the correction factor in real time based on the total running time and the low-load running time of the engine, the method further includes:
judging whether the engine is running normally; wherein if the engine is running normally, a total-running-time timer starts to time to obtain the total running time; and
judging whether a circulation fuel injection amount of the engine is lower than a circulation fuel injection amount threshold, and whether the engine speed is lower than a speed threshold; wherein if the circulation fuel injection amount of the engine is lower than the circulation fuel injection amount threshold and the engine speed is lower than the speed threshold, a low-load timer starts to time to obtain the low-load running time.

Further, in the method for controlling DPF regeneration as described above, after the low-load timer starts to time, the method further includes:
judging whether the low-load running time exceeds a low-load time threshold, and detecting whether current other data of the engine meets a let-pass threshold, wherein if the low-load running time exceeds the low-load time threshold and the other data of the engine meets the let-pass threshold, the engine enters a running protection mode.

Further, in the method for controlling DPF regeneration as described above, the determining the elapsed time, the fuel amount consumed and the mileage traveled from the last DPF regeneration to the current time according to the time, fuel consumption and travel mileage at the time of the last DPF regeneration includes:
obtaining the time, fuel consumption and travel mileage at the time of the last DPF regeneration saved in an ECU, and the current time, the current fuel consumption and the current travel mileage; and
determining the elapsed time, the fuel amount consumed and the mileage traveled from the last DPF regeneration to the current time according to the time, fuel consumption and travel mileage at the time of the last DPF regeneration and the current time, the current fuel consumption and the current travel mileage.

Further, in the method for controlling DPF regeneration as described above, the determining the corrected running time, the corrected fuel consumption and the corrected travel mileage according to the correction factor, the elapsed time, the fuel amount consumed and the mileage traveled includes:
multiplying the elapsed time, the fuel amount consumed and the mileage traveled by the correction factor respectively to obtain the corrected running time, the corrected fuel consumption and the corrected travel mileage.

Further, in the method for controlling DPF regeneration as described above, the judging whether the corrected running time, the corrected fuel consumption and the corrected travel mileage exceed corresponding thresholds and triggering DPF regeneration if one of them exceeds the corresponding threshold includes:
judging whether the corrected running time exceeds a regeneration time threshold, whether the corrected fuel consumption exceeds a regeneration fuel consumption threshold, and whether the corrected travel mileage exceeds a regeneration travel threshold, respectively; and
triggering DPF regeneration if one of the corrected running time, the corrected fuel consumption and the corrected travel mileage exceeds the corresponding threshold.

Further, in the method for controlling DPF regeneration as described above, after judging whether the corrected running time, the corrected fuel consumption and the corrected travel mileage exceed corresponding thresholds, the method further includes:
if none of the corrected running time, the corrected fuel consumption and the corrected travel mileage exceeds the threshold, then continuing to calculate the correction factor in real time based on the total running time and the low-load running time of the engine, determining the correction factor, the elapsed time, the fuel amount consumed and the mileage traveled, and judging whether the thresholds are exceeded.

Further, in the method for controlling DPF regeneration as described above, after the triggering DPF regeneration, the method further includes:
obtaining the current time, the current fuel consumption and the current travel mileage, and updating the time, fuel consumption and travel mileage at the time of the last DPF regeneration.

In a second aspect, the present application proposes a system according to claim 7 for controlling DPF regeneration, which includes:
a running data processing module, which is configured to: calculate a correction factor in real time by dividing a low-load running time by a total running time of an engine; determine an elapsed time, a fuel amount consumed and a mileage traveled from the last DPF regeneration to the current time, according to the time, fuel consumption and travel mileage at the time of the last DPF regeneration; and determine a corrected running time, a corrected fuel consumption and a corrected travel mileage, according to the correction factor, the elapsed time, the fuel amount consumed and the mileage traveled; and
a judgment control module, which is configured to judge whether the corrected running time, the corrected fuel consumption and the corrected travel mileage exceed corresponding thresholds, and trigger DPF regeneration if one of them exceeds the corresponding threshold.

Before calculating the correction factor in real time based on the total running time and the low-load running time of the engine, the running data processing module is further configured to judge whether the engine is running normally; wherein if the engine is running normally, a total-running-time timer starts to time to obtain the total running time; and judge whether a circulation fuel injection amount of the engine is lower than a circulation fuel injection amount threshold, and whether the engine speed is lower than a speed threshold; wherein if the circulation fuel injection amount of the engine is lower than the circulation fuel injection amount threshold and the engine speed is lower than the speed threshold, a low-load timer starts to time to obtain the low-load running time.

In a third aspect, the present application proposes an engine according to claim 8, which includes:
a supercharger, an intercooler, throttle valves, a diesel engine, an exhaust gas recirculation system, a diesel engine oxidation catalyst, a selective catalytic reduction system, a DPF and the system for controlling DPF regeneration;
the DPF is used for regeneration according to a trigger command sent by the system for controlling DPF regeneration.

The present application has the following advantages: the correction factor is calculated in real time based on the total running time and the low-load running time of the engine; the corrected running time, the corrected fuel consumption and the corrected travel mileage are determined according to the correction factor, the elapsed time, the fuel amount consumed and the mileage traveled; it is judged whether the corrected running time, the corrected fuel consumption and the corrected travel mileage exceed corresponding thresholds, and DPF regeneration is triggered if one of them exceeds the corresponding threshold; by doing so, DPF regeneration can be controlled according to actual working conditions to prevent the DPF from being burned out.

### BRIEF DESCRIPTION OF THE DRAWINGS

Upon reading a detailed description of the preferred embodiments below, various other advantages and benefits will become clear to those skilled in the art. The drawings are only for the purpose of illustrating the preferred embodiments, and should not be considered as limiting the present application. Moreover, identical parts are denoted by identical reference signs throughout the drawings. In the drawings:
FIG. 1 is a schematic view of a basic arrangement of an existing engine;
FIG. 2 is a schematic view showing steps of a method for controlling DPF regeneration provided by the present application;
FIG. 3 is a schematic view of a running protection mode of an engine in a method for controlling DPF regeneration provided by the present application;
FIG. 4 is a schematic flowchart of a method for controlling DPF regeneration provided by the present application; and
FIG. 5 is a schematic view of a system for controlling DPF regeneration provided by the present application.

### DETAILED DESCRIPTION

Hereinafter, exemplary embodiments of the present disclosure will be described in more detail with reference to the accompanying drawings. Although the exemplary embodiments of the present disclosure are shown in the drawings, it should be understood that the present disclosure can be implemented in various forms and should not be limited by the embodiments set forth herein. Rather, these embodiments are provided to enable a more thorough understanding of the present disclosure and to fully convey the scope of the present disclosure to those skilled in the art.

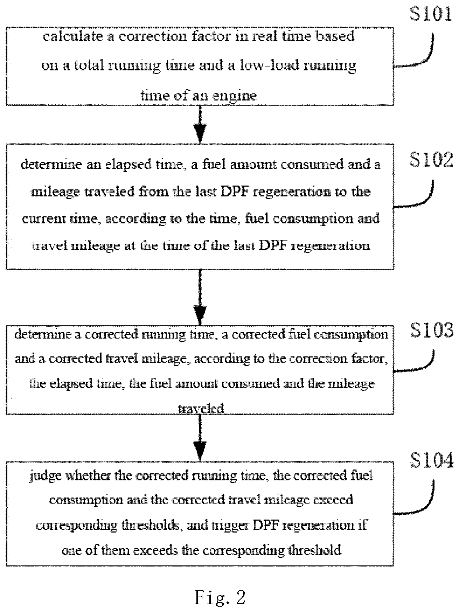

According to an embodiment of the present application, a method for controlling DPF regeneration is proposed; as shown in FIG. 2, the method includes:
S101: calculating a correction factor in real time based on a total running time and a low-load running time of an engine;
S102: determining an elapsed time, a fuel amount consumed and a mileage traveled from the last DPF regeneration to the current time, according to the time, fuel consumption and travel mileage at the time of the last DPF regeneration;
S103: determining a corrected running time, a corrected fuel consumption and a corrected travel mileage, according to the correction factor, the elapsed time, the fuel amount consumed and the mileage traveled; and
S104: judging whether the corrected running time, the corrected fuel consumption and the corrected travel mileage exceed corresponding thresholds, and triggering DPF regeneration if one of them exceeds the corresponding threshold.

Before calculating the correction factor in real time based on the total running time and the low-load running time of the engine, the method further includes:
judging whether the engine is running normally; wherein if the engine is running normally, a total-running-time timer starts to time to obtain the total running time; and
judging whether a circulation fuel injection amount of the engine is lower than a circulation fuel injection amount threshold, and whether the engine speed is lower than a speed threshold; wherein if the circulation fuel injection amount of the engine is lower than the circulation fuel injection amount threshold and the engine speed is lower than the speed threshold, a low-load timer starts to time to obtain the low-load running time.

After the low-load timer starts to time, the method further includes:
judging whether the low-load running time exceeds a low-load time threshold, and detecting whether current other data of the engine meets a let-pass threshold, wherein if the low-load running time exceeds the low-load time threshold and the other data of the engine meets the let-pass threshold, the engine enters a running protection mode.

The determining the elapsed time, the fuel amount consumed and the mileage traveled from the last DPF regeneration to the current time according to the time, fuel consumption and travel mileage at the time of the last DPF regeneration includes:
obtaining the time, fuel consumption and travel mileage at the time of the last DPF regeneration saved in an ECU, and the current time, the current fuel consumption and the current travel mileage; and
determining the elapsed time, the fuel amount consumed and the mileage traveled from the last DPF regeneration to the current time according to the time, fuel consumption and travel mileage at the time of the last DPF regeneration and the current time, the current fuel consumption and the current travel mileage.

The determining the corrected running time, the corrected fuel consumption and the corrected travel mileage according to the correction factor, the elapsed time, the fuel amount consumed and the mileage traveled includes:
multiplying the elapsed time, the fuel amount consumed and the mileage traveled by the correction factor respectively to obtain the corrected running time, the corrected fuel consumption and the corrected travel mileage.

The judging whether the corrected running time, the corrected fuel consumption and the corrected travel mileage exceed corresponding thresholds and triggering DPF regeneration if one of them exceeds the corresponding threshold includes:
judging whether the corrected running time exceeds a regeneration time threshold, whether the corrected fuel consumption exceeds a regeneration fuel consumption threshold, and whether the corrected travel mileage exceeds a regeneration travel threshold, respectively; and
triggering DPF regeneration if one of the corrected running time, the corrected fuel consumption and the corrected travel mileage exceeds the corresponding threshold.

After judging whether the corrected running time, the corrected fuel consumption and the corrected travel mileage exceed corresponding thresholds, the method further includes:
if none of the corrected running time, the corrected fuel consumption and the corrected travel mileage exceeds the threshold, then continuing to calculate the correction factor in real time based on the total running time and the low-load running time of the engine, determining the correction factor, the elapsed time, the fuel amount consumed and the mileage traveled, and judging whether the thresholds are exceeded.

After the triggering DPF regeneration, the method further includes:
obtaining the current time, the current fuel consumption and the current travel mileage, and updating the time, fuel consumption and travel mileage at the time of the last DPF regeneration.

The other data of the engine include: engine water temperature, ambient temperature, whether there is a fault, etc. If all the let-pass thresholds are exceeded, the engine enters the protection mode.

The let-pass thresholds may be set according to actual needs, and one or more thresholds corresponding to various items may be set.

The circulation fuel injection amount threshold and the engine speed threshold may be set according to actual needs.

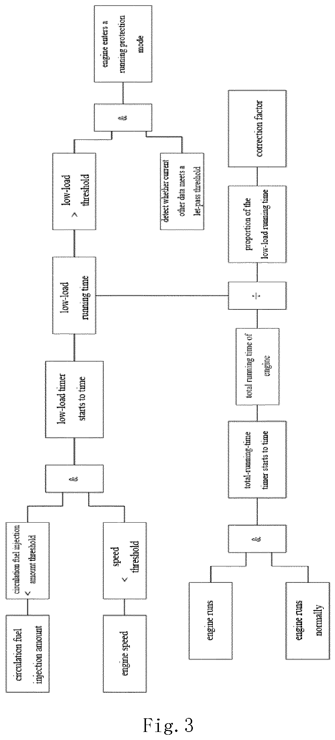

As shown in FIG. 3, the embodiment of the present application also proposes a running protection mode for the engine, which is used for low-temperature and low-load protection of the engine, so that dedicated engine protection can be performed for low-temperature and low-load working conditions.

When the circulation fuel injection amount of the engine is lower than the circulation fuel injection amount threshold of the engine (for example, 10mg/hub) and meanwhile the engine speed is lower than the engine speed threshold (for example, 800r/min), it is judged that the engine is in a low-load running mode. At this point, the timer starts to time. When the low-load running time is greater than the low-load time threshold (for example, 180s), at the same time, it is detected whether other data meet the let-pass thresholds (for example, the water temperature is greater than 60°C, the ambient temperature is greater than -40°C, and the engine has no fault, etc.). If all these conditions are satisfied, the engine will enter the low-temperature and low-load protection mode, fuel injection will be performed at a rail pressure and injection advance angle that are most suitable for low-load running, and controllers such as the throttle valves and EGR valve will be controlled, so as to optimize combustion and reduce the emission of pollutants produced by combustion.

The correction factor is not limited to being used for the correction of triggering DPF regeneration. The low-load correction factor may also be applied to other methods of triggering regeneration, and may be used to correct other regeneration methods (such as model carbon loading, pressure difference carbon loading, etc.)

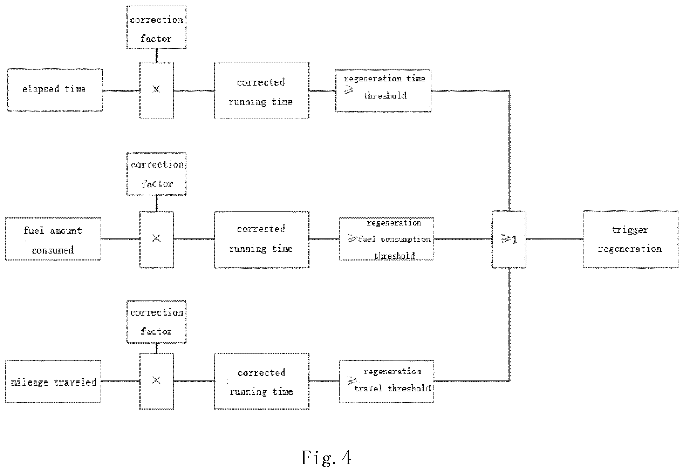

In the following, the embodiment of the present application will be further described, as shown in FIG. 4.

When the engine is running without fault, a statistics is performed on the total running time of the engine.

It is judged whether the circulation fuel injection amount of the engine is lower than the circulation fuel injection amount threshold, and whether the engine speed is lower than the speed threshold; if the circulation fuel injection amount of the engine is lower than the circulation fuel injection amount threshold and the engine speed is lower than the speed threshold, the low-load timer starts to time to obtain the low-load running time. This time is divided by the total running time of the engine to obtain the proportion of the low-load running time, and the correction factor for low-load running is obtained according to the proportion of the low-load running time.

The time, fuel consumption and travel mileage at the time of the last DPF regeneration saved in the ECU and the current time, the current fuel consumption and the current travel mileage are obtained; the elapsed time, the fuel amount consumed and the mileage traveled from the last DPF regeneration to the current time are determined according to the time, fuel consumption and travel mileage at the time of the last DPF regeneration and the current time, the current fuel consumption and the current travel mileage.

The elapsed time, the fuel amount consumed and the mileage traveled are multiplied by the correction factor respectively to obtain the corrected running time, the corrected fuel consumption and the corrected travel mileage.

It is judged whether the corrected running time exceeds a regeneration time threshold, whether the corrected fuel consumption exceeds a regeneration fuel consumption threshold, and whether the corrected travel mileage exceeds a regeneration travel threshold, respectively.

Based on the regeneration time threshold: when a successful DPF regeneration occurs, a regeneration time timer is triggered to time, the elapsed time since the last successful regeneration (this elapsed time will be written into the ECU memory every time the power is off, and the memory value will be read for calculation next time the power is on) is calculated, and the elapsed time is corrected according to the correction factor to obtain a time after correction (corrected running time) since the last successful regeneration. The corrected running time is compared with the regeneration time threshold. If it is greater than the threshold, a regeneration trigger request occurs.

Based on the corrected fuel consumption during running of the engine: when a successful DPF regeneration occurs, the regeneration time timer is triggered to time, the fuel amount consumed since the last successful regeneration (this fuel amount consumed will be written into the ECU memory every time the power is off, and the memory value will be read for calculation next time the power is on) is calculated, and the fuel amount consumed is corrected according to a low-load correction factor to obtain a fuel consumption after correction (corrected fuel consumption) since the last successful regeneration. The corrected fuel consumption is compared with the regeneration fuel consumption threshold. If it is greater than the threshold, a regeneration trigger request occurs.

Based on the regeneration travel threshold: when a successful DPF regeneration occurs, the regeneration time timer is triggered to time, the mileage traveled since the last successful regeneration (this mileage will be written into the ECU memory every time the power is off, and the memory value will be read for calculation next time the power is on) is calculated, and the mileage traveled is corrected according to the low-load correction factor to obtain the corrected travel mileage after correction since the last successful regeneration. The corrected travel mileage is compared with the regeneration travel threshold. If it is greater than the threshold, a regeneration trigger request occurs.

If any one of the above three methods meets the requirements, the DPF regeneration can be triggered. After the DPF regeneration is successful, the time, fuel consumption and mileage since the last successful regeneration will be set to 0, and the time, fuel consumption and mileage since the last successful regeneration will be recalculated.

If none of them exceeds the threshold, then the calculation of the correction factor in real time based on the total running time and the low-load running time of the engine will be continued, the correction factor, the elapsed time, the fuel amount consumed and the mileage traveled are determined, and it is judged whether the thresholds are exceeded.

Because the DPF carbon load in a complex environment changes, the deviation of a different ambient temperature, humidity, pressure, etc. will affect the actual combustion of the engine, the calculation of the excess air coefficient, the engine smoke intensity, and the calculation of the accuracy of the carbon load model. When the engine is not actually working or under working conditions such as heating in winter and cooling in summer, the engine will idle for a long time, causing greater damage to the engine; meanwhile, the carbon load at this time is quite different from that during normal operation, and it is difficult for the existing carbon load model to accurately judge the DPF regeneration under such working conditions, and the problem of DPF burnout is prone to occurrence.

The running protection mode of the engine can be used for low-temperature and low-load protection of the engine, so that dedicated engine protection can be performed for low-temperature and low-load working conditions. At the same time, according to the actual situation, the correction factor is calculated in real time, and the DPF regeneration is controlled, so that whether to perform the DPF regeneration can be accurately judged, and the DPF is prevented from burning out.

In addition, because the catalyst on the post-treatment surface is exposed to environments such as high temperature, ash adhesion, precious metals and the like for a long time, there will be a problem of decreased activity, resulting in aging during post-treatment. By accurately controlling the DPF regeneration, the DPF regeneration efficiency can be improved, the post-treatment life can be prolonged, and the economy of the engine can be improved.

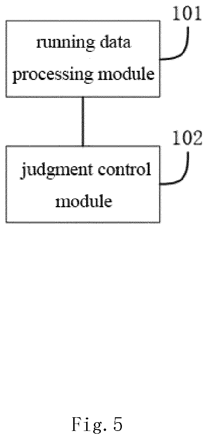

In a second aspect, according to an embodiment of the present application, a system for controlling DPF regeneration is also proposed, as shown in FIG. 5, which includes:
a running data processing module 101, which is configured to: calculate a correction factor in real time based on a total running time and a low-load running time of an engine; determine an elapsed time, a fuel amount consumed and a mileage traveled from the last DPF regeneration to the current time, according to the time, fuel consumption and travel mileage at the time of the last DPF regeneration; and determine a corrected running time, a corrected fuel consumption and a corrected travel mileage, according to the correction factor, the elapsed time, the fuel amount consumed and the mileage traveled; and
a judgment control module 102, which is configured to judge whether the corrected running time, the corrected fuel consumption and the corrected travel mileage exceed corresponding thresholds, and trigger DPF regeneration if one of them exceeds the corresponding threshold.

In a third aspect, according to an embodiment of the present application, an engine is also proposed, which includes: a supercharger, an intercooler, throttle valves, a diesel engine, an exhaust gas recirculation system, a diesel engine oxidation catalyst, a selective catalytic reduction system, a DPF and the system for controlling DPF regeneration;
the DPF is used for regeneration according to a trigger command sent by the system for controlling DPF regeneration.

In the method of the present application, the correction factor is calculated in real time based on the total running time and the low-load running time of the engine; the corrected running time, the corrected fuel consumption and the corrected travel mileage are determined according to the correction factor, the elapsed time, the fuel amount consumed and the mileage traveled; it is judged whether the corrected running time, the corrected fuel consumption and the corrected travel mileage exceed corresponding thresholds, and DPF regeneration is triggered if one of them exceeds the corresponding threshold; by doing so, DPF regeneration can be controlled according to actual working conditions to prevent the DPF from being burned out, the DPF regeneration efficiency can be improved, the post-treatment life can be prolonged, and the economy of the engine can be improved. The regeneration triggering method that corrects the DPF carbon load model based on the low-load running correction factor can trigger the DPF regeneration based on the running time, fuel consumption and mileage of the engine, which enhances the diversity, adaptability and accuracy of the judgment method. The running protection mode of the engine can provide dedicated engine protection for low-temperature and low-load working conditions, thereby reducing damage to the engine caused by long-time idling.

Described above are only specific preferred embodiments of the present application, but the scope of protection of the present application is not limited to this. Any change or replacement that can be easily contemplated by those skilled in the art within the technical scope disclosed in the present application should be covered within the scope of protection of the present application. Therefore, the scope of protection of the present application shall be accorded with the scope of the claims.

## Claims

1. A method for controlling DPF regeneration, comprising:
judging whether an engine is running normally, if the engine is running normally, a total-running-time timer starts to time to obtain a total running time;
judging whether a circulation fuel injection amount of the engine is lower than a circulation fuel injection amount threshold, and whether an engine speed is lower than a speed threshold, if the circulation fuel injection amount of the engine is lower than the circulation fuel injection amount threshold and the engine speed is lower than the speed threshold, a low-load timer starts to time to obtain a low-load running time;
calculating a correction factor in real time by dividing the low-load running time by the total running time of the engine;
determining an elapsed time, a fuel amount consumed and a mileage traveled from the last DPF regeneration to the current time, according to the time, fuel consumption and travel mileage at the time of the last DPF regeneration;
determining a corrected running time, a corrected fuel consumption and a corrected travel mileage, according to the correction factor, the elapsed time, the fuel amount consumed and the mileage traveled; and
judging whether the corrected running time, the corrected fuel consumption and the corrected travel mileage exceed corresponding thresholds, and triggering DPF regeneration if one of them exceeds the corresponding threshold.

2. The method for controlling DPF regeneration according to claim 1, wherein after the low-load timer starts to time, the method further comprises:
judging whether the low-load running time exceeds a low-load time threshold, wherein if the low-load running time exceeds the low-load time threshold, the water temperature is greater than 60° C, the ambient temperature is greater than -40° C, and the engine has no fault, the engine enters a running protection mode.

3. The method for controlling DPF regeneration according to claim 1, wherein the determining the elapsed time, the fuel amount consumed and the mileage traveled from the last DPF regeneration to the current time according to the time, fuel consumption and travel mileage at the time of the last DPF regeneration comprises:
obtaining the time, fuel consumption and travel mileage at the time of the last DPF regeneration saved in an ECU, and the current time, the current fuel consumption and the current travel mileage; and
determining the elapsed time, the fuel amount consumed and the mileage traveled from the last DPF regeneration to the current time according to the time, fuel consumption and travel mileage at the time of the last DPF regeneration and the current time, the current fuel consumption and the current travel mileage.

4. The method for controlling DPF regeneration according to claim 1, wherein the determining the corrected running time, the corrected fuel consumption and the corrected travel mileage according to the correction factor, the elapsed time, the fuel amount consumed and the mileage traveled comprises:
multiplying the elapsed time, the fuel amount consumed and the mileage traveled by the correction factor respectively to obtain the corrected running time, the corrected fuel consumption and the corrected travel mileage.

5. The method for controlling DPF regeneration according to claim 1, wherein after judging whether the corrected running time, the corrected fuel consumption and the corrected travel mileage exceed corresponding thresholds, the method further comprises:
if none of the corrected running time, the corrected fuel consumption and the corrected travel mileage exceeds the threshold, then continuing to calculate the correction factor in real time based on the total running time and the low-load running time of the engine, determining the correction factor, the elapsed time, the fuel amount consumed and the mileage traveled, and judging whether the thresholds are exceeded.

6. The method for controlling DPF regeneration according to claim 1, wherein after the triggering DPF regeneration, the method further comprises:
obtaining the current time, the current fuel consumption and the current travel mileage, and updating the time, fuel consumption and travel mileage at the time of the last DPF regeneration.

7. A system for controlling DPF regeneration, comprising:
a running data processing module (101), which is configured to: judge whether an engine is running normally, if the engine is running normally, a total-running-time timer starts to time to obtain a total running time; judge whether a circulation fuel injection amount of the engine is lower than a circulation fuel injection amount threshold, and whether an engine speed is lower than a speed threshold, if the circulation fuel injection amount of the engine is lower than the circulation fuel injection amount threshold and the engine speed is lower than the speed threshold, a low-load timer starts to time to obtain a low-load running time; calculate a correction factor in real time by dividing the low-load running time by the total running time of the engine; determine an elapsed time, a fuel amount consumed and a mileage traveled from the last DPF regeneration to the current time, according to the time, fuel consumption and travel mileage at the time of the last DPF regeneration; and determine a corrected running time, a corrected fuel consumption and a corrected travel mileage, according to the correction factor, the elapsed time, the fuel amount consumed and the mileage traveled; and
a judgment control module (102), which is configured to judge whether the corrected running time, the corrected fuel consumption and the corrected travel mileage exceed corresponding thresholds, and trigger DPF regeneration if one of them exceeds the corresponding threshold.

8. An engine, comprising:
a supercharger, an intercooler, throttle valves, a diesel engine, an exhaust gas recirculation system, a diesel engine oxidation catalyst, a selective catalytic reduction system, a DPF and the system for controlling DPF regeneration according to claim 7;
wherein the DPF is used for regeneration according to a trigger command sent by the system for controlling DPF regeneration.

## Patentansprüche

1. Verfahren zum Steuern einer DPF-Regeneration, umfassend:
Beurteilen, ob ein Motor normal läuft, wobei, wenn der Motor normal läuft, ein Gesamtlaufzeit-Timer beginnt, eine Zeit zu messen, um eine Gesamtlaufzeit zu erhalten;
Beurteilen, ob eine Zirkulation-Kraftstoffeinspritzmenge des Motors geringer als ein Zirkulation-Kraftstoffeinspritzmenge-Schwellenwert ist, und ob eine Motordrehzahl geringer als ein Drehzahlschwellenwert ist, wobei, wenn die Zirkulation-Kraftstoffeinspritzmenge des Motors geringer als der Zirkulation-Kraftstoffeinspritzmenge-Schwellenwert ist und die Motordrehzahl geringer als der Drehzahlschwellenwert ist, ein Niedriglast-Timer beginnt, eine Zeit zu messen, um eine Niedriglast-Laufzeit zu erhalten;
Berechnen eines Korrekturfaktors in Echtzeit durch Dividieren der Niedriglast-Laufzeit durch die Gesamtlaufzeit des Motors;
Bestimmen einer verstrichenen Zeit, einer verbrauchten Kraftstoffmenge und einer gefahrenen Strecke von der letzten DPF-Regeneration bis zu der gegenwärtigen Zeit, gemäß der Zeit, dem Kraftstoffverbrauch und der Fahrstrecke zur Zeit der letzten DPF-Regeneration;
Bestimmen einer korrigierten Laufzeit, eines korrigierten Kraftstoffverbrauchs und einer korrigierten Fahrstrecke, gemäß dem Korrekturfaktor, der verstrichenen Zeit, der verbrauchten Kraftstoffmenge und der gefahrenen Strecke; und
Beurteilen, ob die korrigierte Laufzeit, der korrigierte Kraftstoffverbrauch und die korrigierte Fahrstrecke entsprechende Schwellenwerte überschreiten, und Auslösen einer DPF-Regeneration, wenn einer davon den entsprechenden Schwellenwert überschreitet.

2. Verfahren zum Steuern einer DPF-Regeneration nach Anspruch 1, wobei, nachdem der Niedriglast-Timer beginnt, eine Zeit zu messen, das Verfahren ferner umfasst:
Beurteilen, ob die Niedriglast-Laufzeit einen Niedriglast-Laufzeit-Schwellenwert überschreitet, wobei wenn die Niedriglast-Laufzeit den Niedriglast-Laufzeit-Schwellenwert überschreitet, die Wassertemperatur größer als 60 °C ist, die Umgebungstemperatur größer als -40 °C ist und der Motor keinen Defekt aufweist, der Motor in einen Laufschutzmodus gelangt.

3. Verfahren zum Steuern einer DPF-Regeneration nach Anspruch 1, wobei das Bestimmen der verstrichenen Zeit, der verbrauchten Kraftstoffmenge und der gefahrenen Strecke von der letzten DPF-Regeneration bis zu der gegenwärtigen Zeit, gemäß der Zeit, dem Kraftstoffverbrauch und der Fahrstrecke zur Zeit der letzten DPF-Regeneration umfasst:
Erhalten der Zeit, des Kraftstoffverbrauchs und der Fahrstrecke zur Zeit der letzten DPF-Regeneration, welche in einer ECU gespeichert sind, und der gegenwärtigen Zeit, des gegenwärtigen Kraftstoffverbrauchs und der gegenwärtigen Fahrstrecke; und
Bestimmen der verstrichenen Zeit, der verbrauchten Kraftstoffmenge und der gefahrenen Strecke von der letzten DPF-Regeneration zu der gegenwärtigen Zeit gemäß der Zeit, dem Kraftstoffverbrauch und der Fahrstrecke zur Zeit der letzten DPF-Regeneration und der gegenwärtigen Zeit, dem gegenwärtigen Kraftstoffverbrauch und der gegenwärtigen Fahrstrecke.

4. Verfahren zum Steuern einer DPF-Regeneration nach Anspruch 1, wobei das Bestimmen der korrigierten Laufzeit, des korrigierten Kraftstoffverbrauchs und der korrigierten Fahrstrecke, gemäß dem Korrekturfaktor, der verstrichenen Zeit, der verbrauchten Kraftstoffmenge und der gefahrenen Strecke umfasst:
Multiplizieren der verstrichenen Zeit, der verbrauchten Kraftstoffmenge und der gefahrenen Strecke jeweils mit dem Korrekturfaktor, um die korrigierte Laufzeit, den korrigierten Kraftstoffverbrauch und die korrigierte Fahrstrecke zu erhalten.

5. Verfahren zum Steuern einer DPF-Regeneration nach Anspruch 1, wobei nach dem Beurteilen, ob die korrigierte Laufzeit, der korrigierte Kraftstoffverbrauch und die korrigierte Fahrstrecke entsprechende Schwellenwerte überschreiten, das Verfahren ferner umfasst:
wenn keines aus der korrigierten Laufzeit, dem korrigierten Kraftstoffverbrauch und der korrigierten Fahrstrecke den Schwellenwert überschreitet, dann Fortsetzen, den Korrekturfaktor auf Grundlage der Gesamtlaufzeit und der Niedriglast-Laufzeit des Motors in Echtzeit zu berechnen, Bestimmen des Korrekturfaktors, der verstrichenen Zeit, der verbrauchten Kraftstoffmenge und der gefahrenen Strecke, und Beurteilen, ob die Schwellenwerte überschritten werden.

6. Verfahren zum Steuern einer DPF-Regeneration nach Anspruch 1, wobei nach dem Auslösen der DPF-Regeneration, das Verfahren ferner umfasst:
Erhalten der gegenwärtigen Zeit, des gegenwärtigen Kraftstoffverbrauchs und der gegenwärtigen Fahrstrecke, und Aktualisieren der Zeit, des Kraftstoffverbrauchs und der Fahrstrecke zur Zeit der letzten DPF-Regeneration.

7. System zum Steuern einer DPF-Regeneration, umfassend:
ein Laufdaten- Verarbeitungsmodul (101), welches eingerichtet ist zum: Beurteilen, ob ein Motor normal läuft, wobei, wenn der Motor normal läuft, ein Gesamtlaufzeit-Timer beginnt, eine Zeit zu messen, um eine Gesamtlaufzeit zu erhalten; Beurteilen, ob eine Zirkulation-Kraftstoffeinspritzmenge des Motors geringer als ein Zirkulation-Kraftstoffeinspritzmenge-Schwellenwert ist, und ob eine Motordrehzahl geringer als ein Drehzahlschwellenwert ist, wobei, wenn die Zirkulation-Kraftstoffeinspritzmenge des Motors geringer als der Zirkulation-Kraftstoffeinspritzmenge-Schwellenwert ist und die Motordrehzahl geringer als der Drehzahlschwellenwert ist, ein Niedriglast-Timer beginnt, eine Zeit zu messen, um eine Niedriglast-Laufzeit zu erhalten; Berechnen eines Korrekturfaktors in Echtzeit durch Dividieren der Niedriglast-Laufzeit durch die Gesamtlaufzeit des Motors; Bestimmen einer verstrichenen Zeit, einer verbrauchten Kraftstoffmenge und einer gefahrenen Strecke von der letzten DPF-Regeneration bis zu der gegenwärtigen Zeit, gemäß der Zeit, dem Kraftstoffverbrauch und der Fahrstrecke zur Zeit der letzten DPF-Regeneration; und Bestimmen einer korrigierten Laufzeit, eines korrigierten Kraftstoffverbrauchs und einer korrigierten Fahrstrecke, gemäß dem Korrekturfaktor, der verstrichenen Zeit, der verbrauchten Kraftstoffmenge und der gefahrenen Strecke; und
ein Beurteilungssteuermodul (102), welches eingerichtet ist zum: Beurteilen, ob die korrigierte Laufzeit, der korrigierte Kraftstoffverbrauch und die korrigierte Fahrstrecke entsprechende Schwellenwerte überschreiten, und Auslösen einer DPF-Regeneration, wenn einer davon den entsprechenden Schwellenwert überschreitet.

8. Motor, umfassend:
einen Lader, einen Zwischenkühler, Drosselventile, einen Dieselmotor, ein Abgasrückführungssystem, einen Dieselmotor-Oxidationskatalysator, ein System zur selektiven katalytischen Reduktion, einen DPF und das System zum Steuern einer DPF-Regeneration nach Anspruch 7;
wobei der DPF für eine Regeneration gemäß einem Auslösebefehl verwendet wird, welcher durch das System zum Steuern einer DPF-Regeneration gesendet wird.

## Revendications

1. Procédé de commande de régénération de DPF, comprenant :
l'estimation si un moteur fonctionne normalement, si le moteur fonctionne normalement, un minuteur de temps de fonctionnement total commence à minuter pour obtenir un temps de fonctionnement total ;
l'estimation si une quantité d'injection de carburant en circulation du moteur est inférieure à un seuil de quantité d'injection de carburant en circulation et si une vitesse moteur est inférieure à un seuil de vitesse, si la quantité d'injection de carburant en circulation du moteur est inférieure au seuil de quantité d'injection de carburant en circulation et si la vitesse moteur est inférieure au seuil de vitesse, un minuteur de charge faible commence à minuter pour obtenir un temps de fonctionnement de charge faible ;
le calcul d'un facteur de correction en temps réel en divisant le temps de fonctionnement de charge faible par le temps de fonctionnement total du moteur ;
la détermination d'un temps écoulé, d'une quantité de carburant consommée et d'une distance parcourue à partir de la dernière régénération de DPF jusqu' au moment actuel, en fonction du temps, de la consommation de carburant et de la distance parcourue au moment de la dernière régénération de DPF ;
la détermination d'un temps de fonctionnement corrigé, d'une consommation de carburant corrigée et d'une distance parcourue corrigée, en fonction du facteur de correction, du temps écoulé, de la quantité de carburant consommée et de la distance parcourue ; et
l'estimation si le temps de fonctionnement corrigé, la consommation de carburant corrigée et la distance parcourue corrigée excèdent les seuils correspondants, et le déclenchement d'une régénération de DPF si l'un de ces critères excède le seuil correspondant.

2. Procédé de commande de régénération de DPF selon la revendication 1, dans lequel après que le minuteur de charge faible commence à minuter, le procédé comprend en outre :
l'estimation si le temps de fonctionnement de charge faible excède un seuil de temps de charge faible, si le temps de fonctionnement de charge faible excède le seuil de temps de charge faible, si la température de l'eau est supérieure à 60 °C, si la température ambiante est supérieure à -40 °C et si le moteur ne présente aucune défaillance, le moteur entre dans un mode de protection de fonctionnement.

3. Procédé de commande de régénération de DPF selon la revendication 1, dans lequel la détermination du temps écoulé, de la quantité de carburant consommée et de la distance parcourue à partir de la dernière régénération de DPF jusqu'au moment actuel en fonction du temps, de la consommation de carburant et de la distance parcourue au moment de la dernière régénération de DPF comprend :
l'obtention du temps, de la consommation de carburant et de la distance parcourue au moment de la dernière régénération de DPF enregistrée dans une unité de calcul électronique, et du temps actuel, de la consommation de carburant actuelle et de la distance parcourue actuelle ; et
la détermination du temps écoulé, de la quantité de carburant consommée et de la distance parcourue à partir de la dernière régénération de DPF jusqu'au moment actuel en fonction du temps, de la consommation de carburant et de la distance parcourue au moment de la dernière régénération de DPF et du temps actuel, de la consommation de carburant actuelle et de la distance parcourue actuelle.

4. Procédé de commande de régénération de DPF selon la revendication 1, dans lequel la détermination du temps de fonctionnement corrigé, de la consommation de carburant corrigée et de la distance parcourue corrigée en fonction du facteur de correction, du temps écoulé, de la quantité de carburant consommée et de la distance parcourue comprend :
la multiplication du temps écoulé, de la quantité de carburant consommée et de la distance parcourue par le facteur de correction respectivement pour obtenir le temps de fonctionnement corrigé, la consommation de carburant corrigée et la distance parcourue corrigée.

5. Procédé de commande de régénération de DPF selon la revendication 1, dans lequel après l'estimation si le temps de fonctionnement corrigé, la consommation de carburant corrigée et la distance parcourue corrigée excèdent les seuils correspondants, le procédé comprend en outre :
si aucun des critères parmi le temps de fonctionnement corrigé, la consommation de carburant corrigée et la distance parcourue corrigée n'excède le seuil, la poursuite du calcul du facteur de correction en temps réel sur la base du temps de fonctionnement total et du temps de fonctionnement de charge faible du moteur, la détermination du facteur de correction, du temps écoulé, de la quantité de carburant consommée et de la distance parcourue, et l'estimation si les seuils sont dépassés.

6. Procédé de commande de régénération de DPF selon la revendication 1, dans lequel après le déclenchement d'une régénération de DPF, le procédé comprend en outre :
l'obtention du temps actuel, de la consommation de carburant actuelle et de la distance parcourue actuelle, et la mise à jour du temps, de la consommation de carburant et de la distance parcourue au moment de la dernière régénération de DPF.

7. Système de commande de régénération de DPF, comprenant :
un module de traitement de données de fonctionnement (101), qui est configuré pour :
estimer si un moteur fonctionne normalement, si le moteur fonctionne normalement, un minuteur de temps de fonctionnement total commence à minuter pour obtenir un temps de fonctionnement total ; estimer si une quantité d'injection de carburant en circulation du moteur est inférieure à un seuil de quantité d'injection de carburant en circulation, et si une vitesse moteur est inférieure à un seuil de vitesse, si la quantité d'injection de carburant en circulation du moteur est inférieure au seuil de quantité d'injection de carburant en circulation et si la vitesse moteur est inférieure au seuil de vitesse, un minuteur de charge faible commence à minuter pour obtenir un temps de fonctionnement de charge faible ; calculer un facteur de correction en temps réel en divisant le temps de fonctionnement de charge faible par le temps de fonctionnement total du moteur ; déterminer un temps écoulé, une quantité de carburant consommée et une distance parcourue à partir de la dernière régénération de DPF jusqu'au moment actuel, en fonction du temps, de la consommation de carburant et de la distance parcourue au moment de la dernière régénération de DPF ; et déterminer un temps de fonctionnement corrigé, une consommation de carburant corrigée et une distance parcourue corrigée, en fonction du facteur de correction, du temps écoulé, de la quantité de carburant consommée et de la distance parcourue ; et
un module de commande d'estimation (102), qui est configuré pour estimer si le temps de fonctionnement corrigé, la consommation de carburant corrigée et la distance parcourue corrigée excèdent les seuils correspondants, et pour déclencher une régénération de DPF si l'un de ces critères excède le seuil correspondant.

8. Moteur, comprenant :
un compresseur d'alimentation, un refroidisseur intermédiaire, des papillons des gaz, un moteur diesel, un système de recirculation des gaz d'échappement, un catalyseur d'oxydation de moteur diesel, un système de réduction catalytique sélective, un DPF et le système de commande de régénération de DPF selon la revendication 7 ;
dans lequel le DPF est utilisé pour la régénération en fonction d'une commande de déclenchement envoyée par le système de commande de régénération de DPF.
